# EUROPEAN PATENT SPECIFICATION

(11) **EP 4 467 121 B1**
(45) Date of publication and mention of the grant of the patent: **24.06.2026**
(21) Application number: 24178119.4
(22) Date of filing: 25.05.2024
(51) Int. Cl.: A61H 1/02

(54) **A REHABILITATION EXOSKELETON FOR THE HUMAN UPPER LIMB**
EIN REHABILITATIONS-EXOSKELETT FÜR DIE MENSCHLICHE OBERE EXTREMITÄT
UN EXOSQUELETTE DE RÉÉDUCATION POUR LE MEMBRE SUPÉRIEUR HUMAIN

(30) Priority: 25.05.2023 PL 44500123
(43) Date of publication of application: 27.11.2024
(73) Proprietor: Siec Badawcza Lukasiewicz Przemyslowy Instytut Automatyki i Pomiarow PIAP, 02-486 Warszawa (PL)
(72) Inventor: FALKOWSKI, Piotr, 02-237 Warszawa (PL); LECZKOWSKI, Bazyli, 96-300 Zyradow (PL); WILK, Julia, 46-320 Praszka (PL); PILAT, Zbigniew, 05-800 Pruszkow (PL); KINSKI, Wojciech, 13-206 Plosnica (PL)

(56) References cited:
- WO-A2-2018/093448
- US-A1- 2013 237 883
- US-A1- 2022 176 546

## Description

The subject of the invention is a rehabilitation exoskeleton for the human upper limb, having the form of an open kinematic chain of rigid segments rotationally connected to each other, configured to attach in parallel to the rehabilitated limb.

Multi-segment upper-limb rehabilitation devices are known from patent publications No. CN111150608A and CN112716750A. However, these patents focus on controlling the segments of the kinematic chain and the structure of the device is only shown on a drawing. Polish patent description No. PL238105B1 discloses a solution closest to the subject of the invention. This document describes a rehabilitation exoskeleton for the human upper limb, having a form of an open kinematic chain of serially arranged rigid segments connected to each other in rotating pairs. It is equipped with means for attaching these segments to the rehabilitated limb, with the zeroth segment of the mentioned kinematic chain located adjacent to the shoulder of the rehabilitated limb, while its last segment is located adjacent to the hand and equipped with a hand-held grip. The straight line marking the axis of rotation of each rotating pair is spatially perpendicular to the straight line marking the axis of rotation of the adjacent rotating pair. In each rotating pair, there is a sensor for the mutual angular placement of the segments forming that rotating pair, while the rotating connection in the two rotating pairs of the exoskeleton is in the form of a ring guide that surrounds the rehabilitated limb.

Document WO2018093448A2 discloses an exoskeleton comprising all the technical features set out in the preamble of claim 1.

### SUMMARY OF THE INVENTION

The present invention is directed to an exoskeleton according to claim 1. Additional features and embodiments of the invention are defined in the dependent claims.

### SUMMARY OF THE DISCLOSURE

The purpose of the invention was to develop a lightweight and easily modifiable exoskeleton design for functional rehabilitation of the shoulder and elbow joints at home.

This purpose is fulfilled by the exoskeleton according to the invention as defined in the following claims which has the form of an open kinematic chain of serially arranged rigid segments connected to each other in rotating pairs. It is equipped with means for attaching these segments to the rehabilitated limb. The zeroth segment of the mentioned kinematic chain is located adjacent to the shoulder of the rehabilitated limb, while its last segment is located adjacent to the hand and equipped with a hand-held grip. The straight line marking the axis of rotation of each rotating pair is spatially perpendicular to the straight line marking the axis of rotation of the adjacent rotating pair. In each rotating pair, there is a sensor for the mutual angular placement of the segments forming that rotating pair, while the rotating connection in two rotating pairs of the exoskeleton is in the form of a ring guide that surrounds the rehabilitated limb. The invention is based on the fact that the kinematic chain of the exoskeleton is made up by the zeroth, first, second, third, fourth and fifth segments connected rotationally in sequence. These segments form five consecutive rotating pairs. The first rotating pair is made up by the zeroth and the first segments. The second rotating pair is made up by the first and the second segments. The third rotating pair is made up by the second and the third segments. The fourth rotating pair is made up by the third ang the fourth segments. The fifth rotating pair is made up by the fourth and the fifth segments, which is the last segment in this chain. The axes of rotation of the third and fifth rotating pairs of the exoskeleton are on a single straight line when the axis of the rehabilitated limb attached to the exoskeleton is parallel to the transverse axis of the body. The rotating connection of the first, second and fourth rotating pairs is made up by a separate rotating electric motor. The stator of such a motor is rigidly connected to one segment of a given rotating pair, and its rotor is rigidly connected to the second segment of that rotating pair. Each motor constituting the rotating connection of a given rotating pair includes an integrated sensor of the rotor position relative to the stator. The rotating connection of the third and fifth rotating pairs is made up by open ring sliding guides. Each of these guides comprises a body in the form of a ring section with an inner annular groove, open to the outside and advantageously T-shaped, and a rotating slider in the form of a ring section with a projection shaped to fit into the groove of the body of a given guide. The first segment of the exoskeleton has a mechanism for adjusting its length measured along the axis of rotation of the first rotating pair. The third segment of the exoskeleton has a mechanism for adjusting its length measured along the axis of rotation of the third rotating pair. The fifth segment of the exoskeleton has a mechanism for adjusting its length measured along the axis of rotation of the fifth rotating pair. The adjustment mechanisms of said lengths of the first, third and fifth segments of the exoskeleton are equipped with a sensor for the current value of said length. The sensor for the mutual angular position of the segments of the third and fifth rotating pairs is a ring section made of magnetic tape, mounted coaxially to the rotating slider of the corresponding guide, and a magnetic encoder attached to the body of said guide.

In one of variants of the disclosure when a right-handed spatial coordinate system with *Xᵢ Yᵢ Zᵢ* axes is associated with each segment of the kinematic chain of the exoskeleton, where *i* is the number of the segment with which a given coordinate system is associated and the *Zᵢ* axis of this system coincides with the axis of rotation of segment *i*+*1,* forming a given rotating pair with segment *i,* then according to Denavit-Hartenberg notation, the position of each coordinate system *Xᵢ Yᵢ Zᵢ*, when segment *i* is at the zeroth position relative to the preceding segment *i-1,* is determined by two angular variables *Θᵢ*, and *αᵢ*, and two linear variables *aᵢ* and *dᵢ.* For this exoskeleton, the value of the variables *Θᵢ, Θ₂, α₂* and *α₅* is 90 degrees, the value of the variables *α₁*, *α₃* and *α₄* is -90 degrees, the values of the variables *d₁, d₃* and *d₅* are greater than zero, and the value of the variables *Θ₃, Θ₄, Θ₅, a₁, a₂, a₃, a₄, a₅, d₂* and *d₄* is zero. The range of relative rotational motion of the segments in the first rotating pair is -140 degrees to 90 degrees. The range of relative rotational motion of the segments in the second and third rotating pairs is -50 degrees to 130 degrees. The range of relative rotational motion of the segments in the fourth rotating pair is 0 to 140 degrees, and the range of relative rotational motion of the segments in the fifth rotating pair is -80 to 80 degrees.

In next variant of the invention, the angular length of the body of each ring sliding guide is in the range of 200 to 250 degrees, with the body of each guide equipped with a means for attaching the rehabilitated limb therein, advantageously in the form of a flexible tape with a tie-down buckle.

In next variant of the invention, the measurement resolution of the mutual angular position sensors of the segments in the third and fifth rotating pairs is at least 1 degree, and the measurement resolution of the mutual angular position of the segments in the first, second and fourth rotating pairs is at least 0.1 degree.

In another variant of the invention, the maximum continuous torque of the electric motor of the first and second rotating pairs is in the range of 46 to 50 newton-metres, while the maximum continuous torque of the electric motor of the fourth rotating pair is in the range of 8 to 10 newton-meters.

In yet another variant of the invention, the maximum continuous rotational frequency of the electric motor of the first and second rotating pairs is in the range of 55 to 59 revolutions per minute, while the maximum continuous rotational frequency of the electric motor of the fourth rotating pair is in the range of 240 to 250 revolutions per minute.

The exoskeleton according to the invention is characterized by its smaller size and weight compared to known rehabilitation devices of this type. This makes it easier to use, particularly in a restricted space, such as a patient's small apartment, and allows the device to be carried through a standard door. Individual segments of the exoskeleton can be executed using 3D printing technology, making it easy to design and manufacture its parts, including replacement parts tailored to the individual needs of the patient due to, e.g., unique anatomical structure or unusual diseases. There are two options of mounting the exoskeleton according to the invention, that is, on the patient's shoulder and on a frame, which makes it possible to rehabilitate both patients who are able to hold the device independently and those who need support in lifting it. Thanks to accurate joint mobilization, exercises can be carried out in accordance with correct movement patterns. By leaving two non-driven rotating pairs in the exoskeleton's kinematic chain, the patient remains more independent during exercise, and movement patterns are more natural, without overloading the device at the same time. The ability to adjust the length of individual segments allows using one device to rehabilitate a very wide range of patients, falling between the 5th percentile of the female part of the Polish population and the 95th percentile of the male part of the Polish population. The invention allows it to be used in telemedicine, making it possible to rehabilitate patients both individually at home and collectively in local non-medical facilities, with simultaneous constant supervision by qualified medical staff. This speeds up recovery considerably, as it largely eliminates the need to wait for an appointment at specialized health care facilities and reduces commute time.

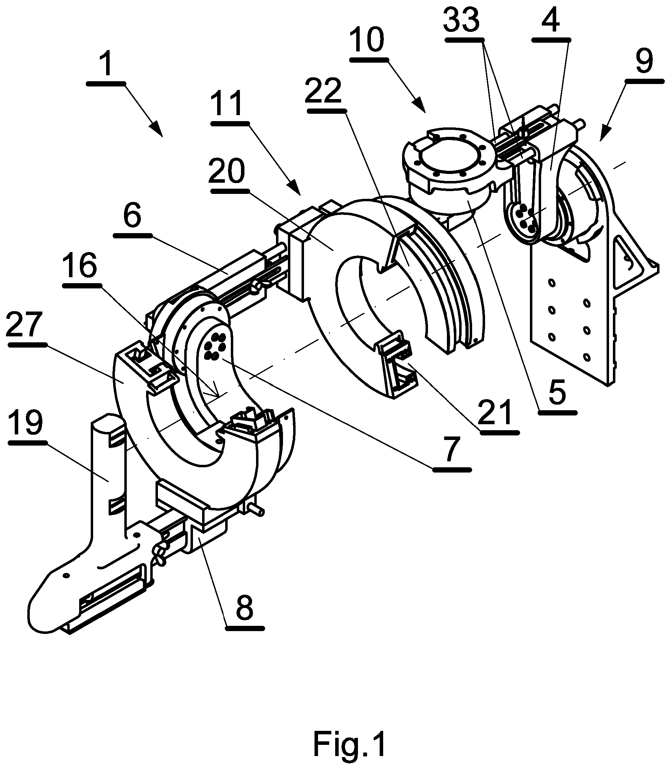

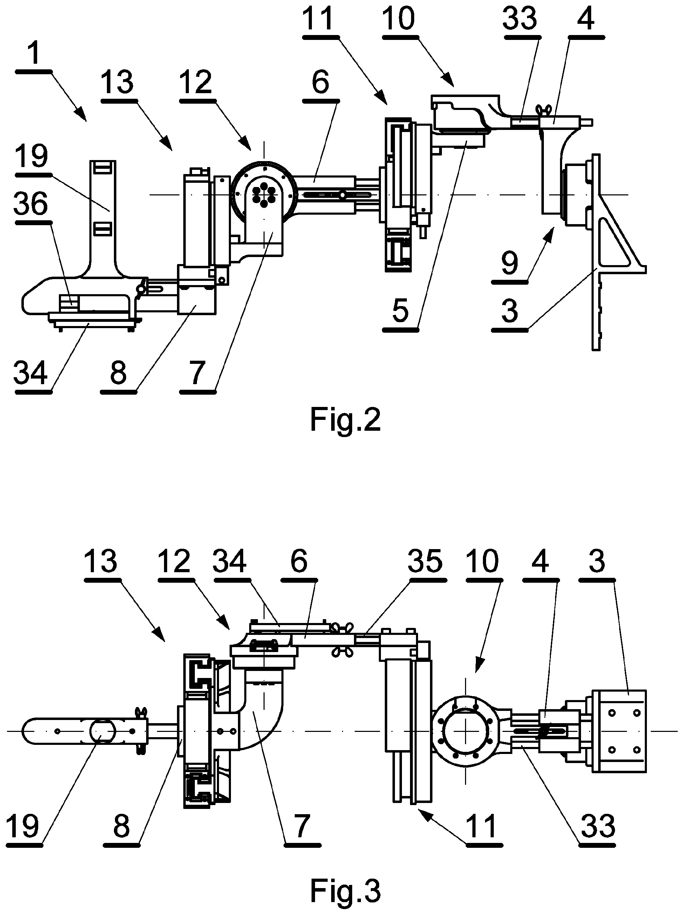

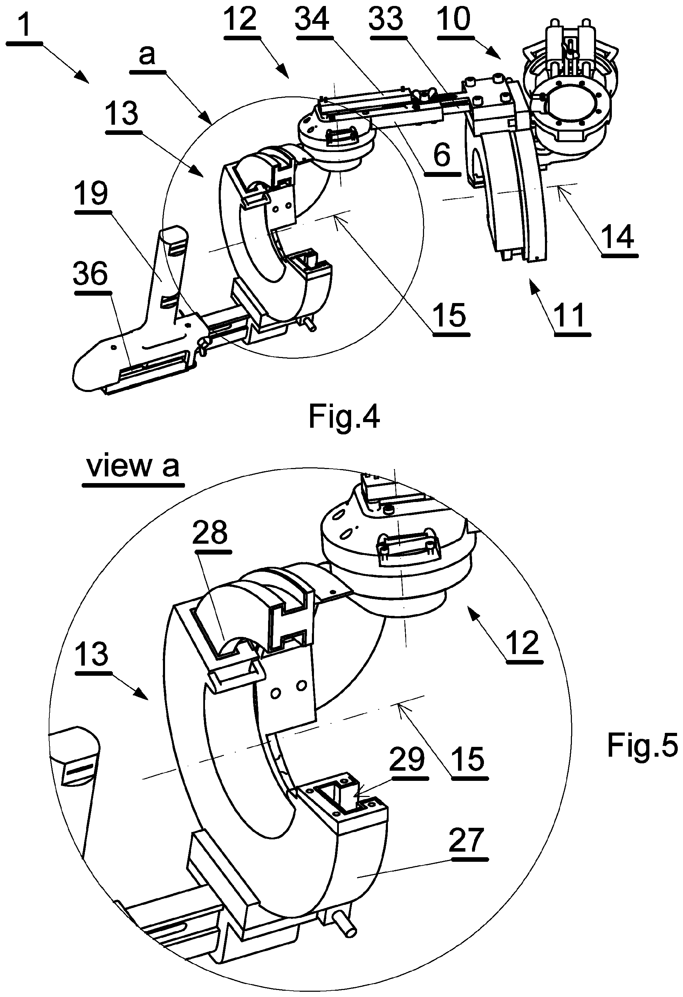

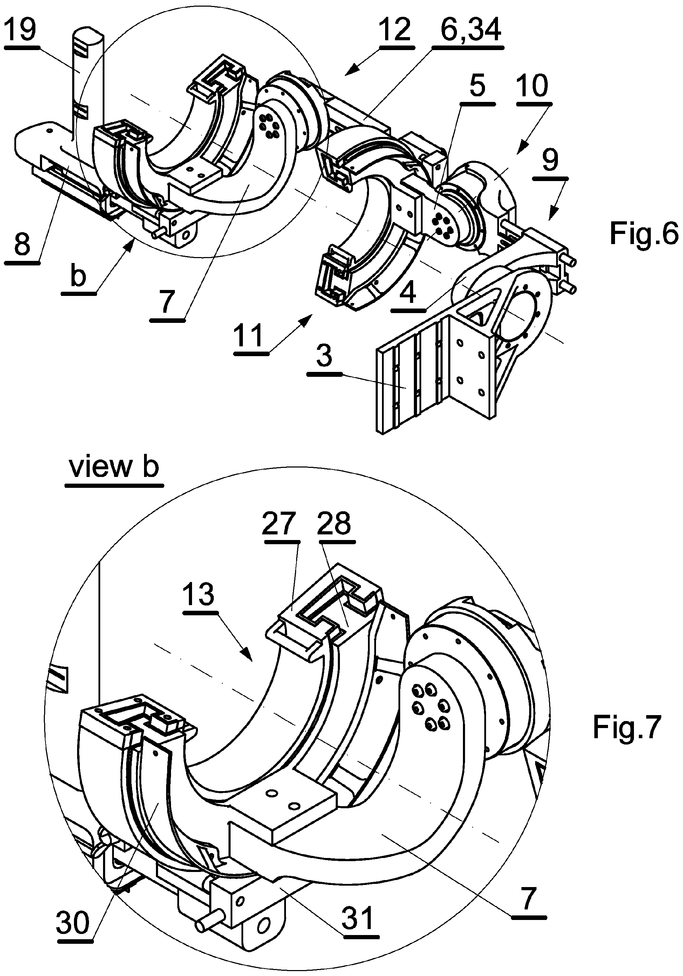

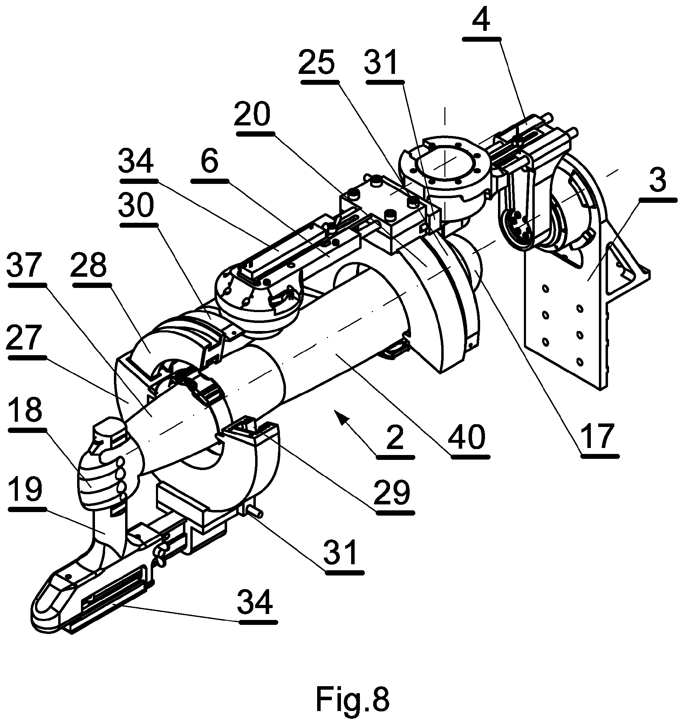

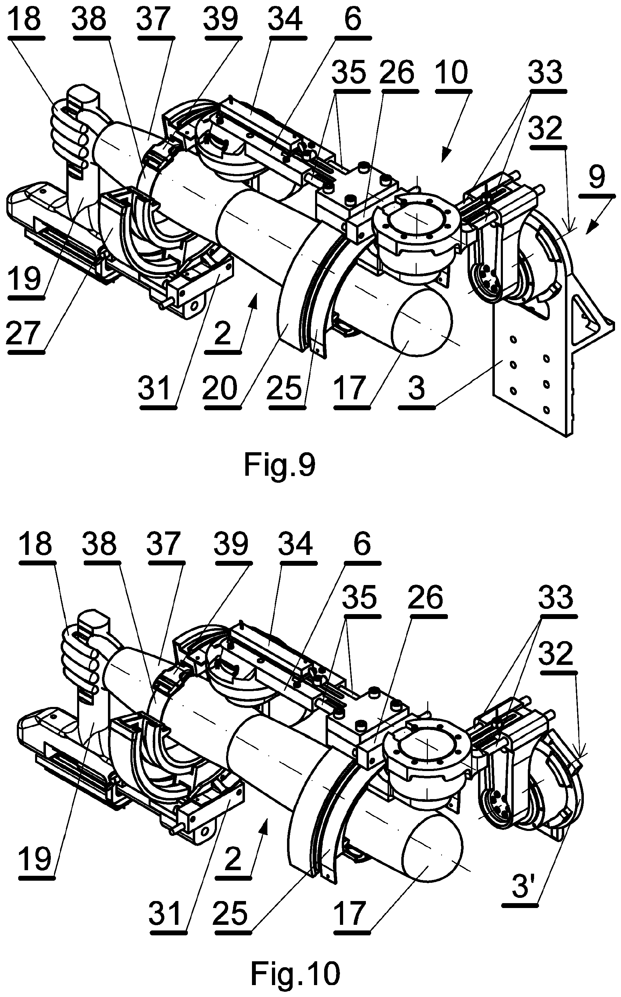

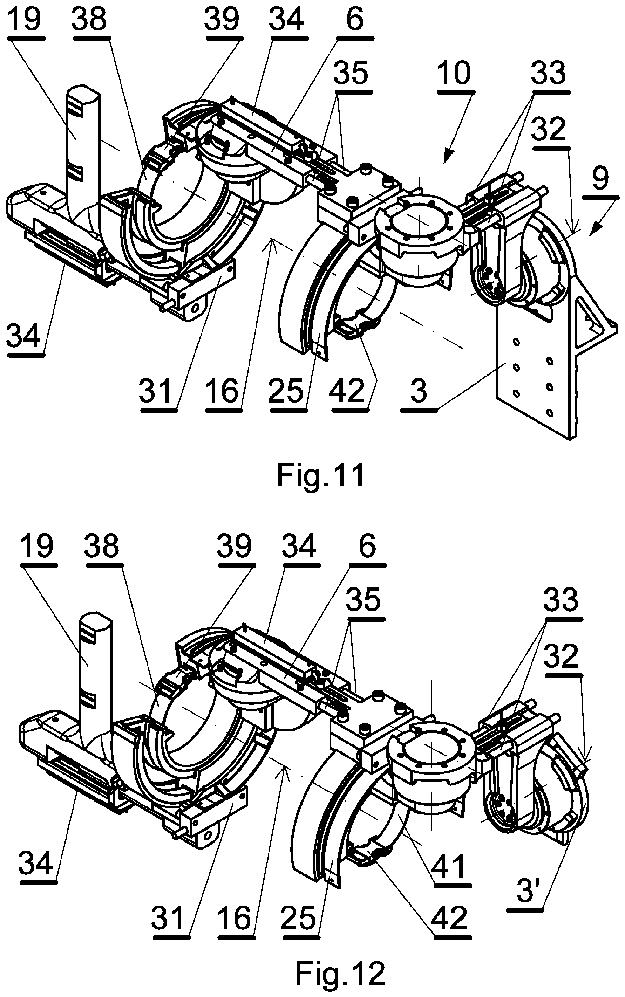

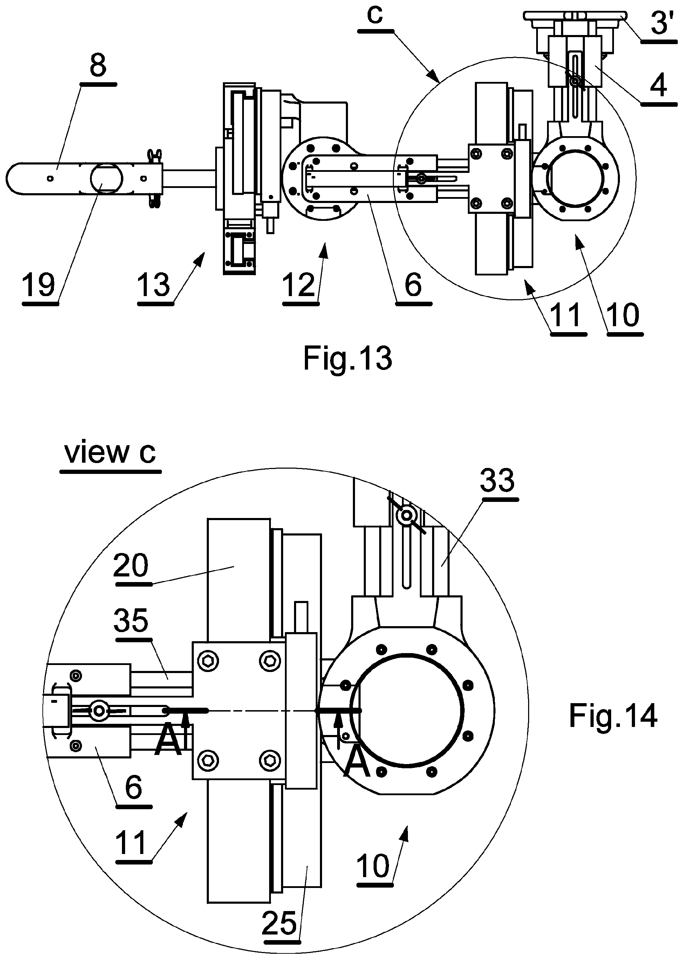

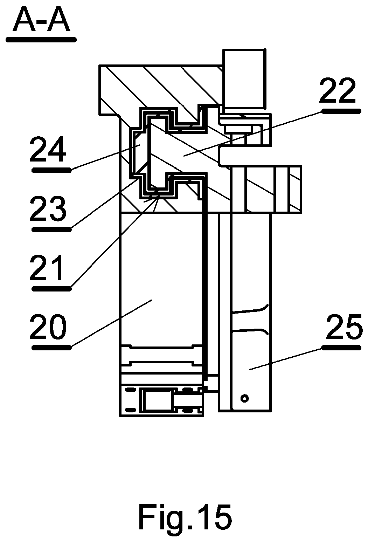

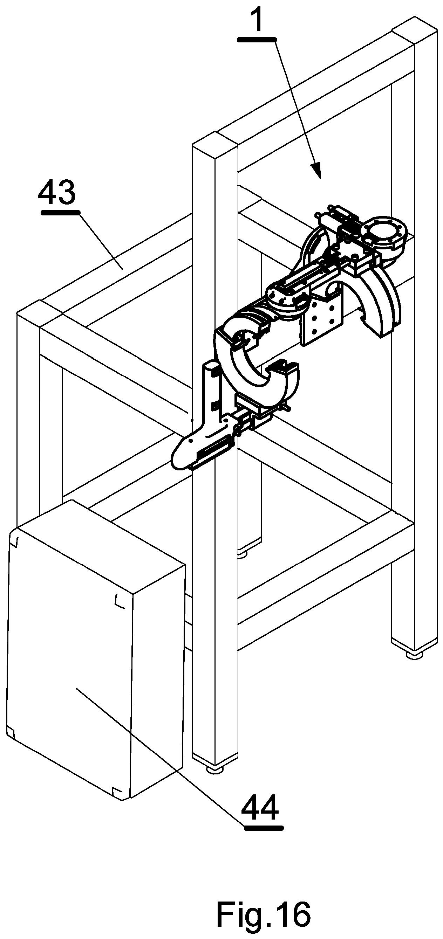

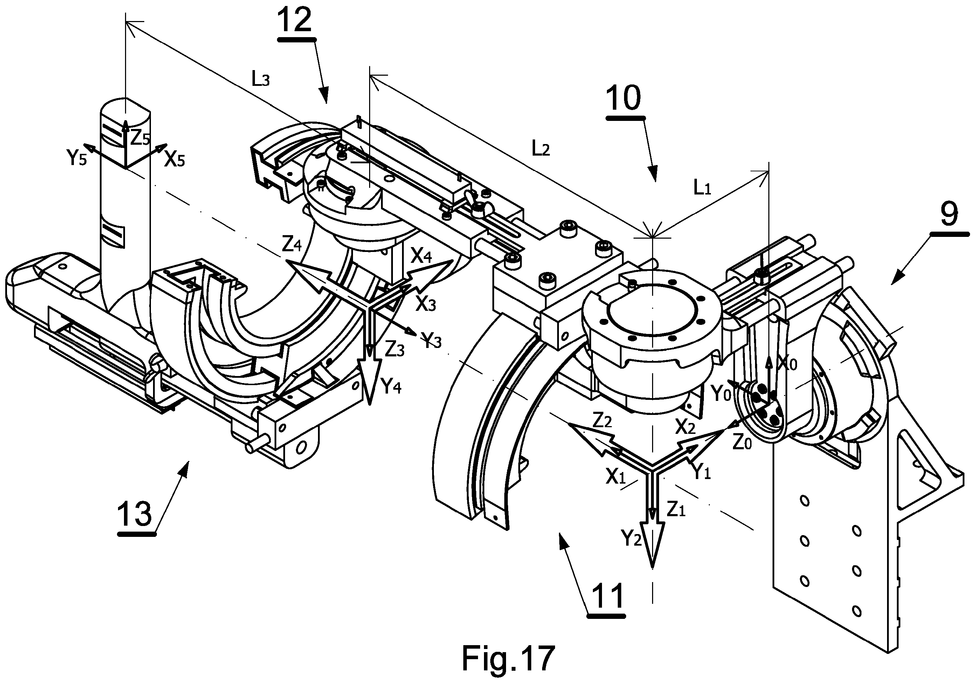

An exemplary embodiment of the invention is shown in the drawing, where Fig.1 shows the axonometric projection of the exoskeleton positioned horizontally in a position where the axes of rotation of the first, third and fifth rotating pairs are on a single straight line. Fig.2 shows the exoskeleton from Fig.1 in side view, while Fig.3 shows the same exoskeleton in top view. Fig.4 shows the same exoskeleton in axonometric projection, in which, relative to the position in Fig.1, the first segment relative to the second segment, the third segment relative to the second segment and the fourth segment relative to the third segment are rotated. Fig.5 shows an enlarged section of the view from Fig.4. Fig.6 shows the same exoskeleton, in which - relative to the position in Fig.1 - the second segment together with the first and zeroth segments have been rotated by 90 degrees relative to the third segment, while Fig.7 shows an enlarged section of the view from Fig.6. Fig.8 shows, in axonometric projection, the exoskeleton from Fig.1, in which the rehabilitated limb is schematically mounted and in which the third and fourth segments are rotated by 90 degrees relative to the second and fifth segments. Fig.9 shows, in another axonometric projection, the exoskeleton from Fig.8, in which the first segment has been rotated by 90 degrees along with the zeroth segment. Fig.10 shows the exoskeleton from Fig.9 with a variant of the zeroth segment adapted to attach the exoskeleton to the patient's shoulder girdle area. Fig.11 and Fig.12 show the exoskeleton from Fig.9 and Fig.10, respectively, in the same axonometric projection, but without the rehabilitated limb. Fig.13 shows the exoskeleton from Fig.12 in top view, while Fig.14 shows an enlarged section of the view from Fig.13. Fig.15 shows a cross-section through the sliding guide of the third rotating pair of the exoskeleton by the plane in which the axis of rotation of this pair lies. Fig.16 shows the attachment of the exoskeleton from Fig.11 to the example frame, while Fig.17 shows this exoskeleton with marked coordinate systems used in Denavit-Hartenberg notation.

The example rehabilitation exoskeleton 1 of the human upper limb 2 fits in a space measuring 500 x 500 x 1000 mm and is made predominantly of plastic as a 3D print-out. Using SLS technology, load-bearing components were made from a material with the trade name Nylon 12, while FDM technology was used to make the sliding components. Screws and press-in nuts were used to connect the parts of the exoskeleton 1. In the drawing, limb 2 symbolizes the right limb. The exoskeleton 1 is in the form of an open kinematic chain of six serially arranged segments, that is, zeroth segment 3, first segment 4, second segment 5, third segment 6, fourth segment 7 and fifth segment 8. The successive segments of the exoskeleton form successive rotating pairs with each other, in which one segment of a given pair rotates relative to the other segment of that pair. The straight line marking the axis of rotation of each rotating pair of the exoskeleton 1 is spatially perpendicular to the straight line marking the axis of rotation of the adjacent rotating pair of this exoskeleton. The first rotating pair 9 is made up by the segments zeroth 3 and the first 4. The second rotating pair 10 is made up by segments first 4 and second 5. The third rotating pair 11 is made up by segments first 5 and third 6. The fourth rotating pair 12 is made up by segments third 6 and fourth 7. The fifth rotating pair 13 is made up by segments fourth 7 and fifth 8. The axis of rotation 14 of the third rotating pair 11 and axis of rotation 15 of the fifth rotating pair 13 of the exoskeleton 1 are on a single straight line 16 when the axis of the rehabilitated limb 2 attached to the exoskeleton 1 is parallel to the transverse axis of the rehabilitated person's body. The zeroth segment 3 is located adjacent to the shoulder 17 of the rehabilitated limb 2. The fifth segment 8, that is the last segment of the exoskeleton 1, is located adjacent to the hand 18 of the limb 2 and equipped with a handle 19 gripped by the hand of this limb. In each rotating pair, there is a sensor for the mutual angular placement of the segments forming that rotating pair. The rotating connection of the first 9, second 10 and fourth 12 rotating pairs is made up by, not shown in the drawing , a separate, known DC (24V) servo drive containing a rotating electric motor integrated with an absolute encoder. The stator of the motor is rigidly connected to one segment of a given rotating pair, and its rotor is rigidly connected to the second segment of that rotating pair, while the encoder is a sensor of the angular position of one segment of a given kinematic pair relative to the other segment of that pair, with a resolution of 0.1 angular degrees. The maximum continuous torque of the electric motor of the first 9 and second 10 rotating pairs is 48 newton-metres, while the maximum continuous torque of the electric motor of the fourth rotating pair 12 is 9 newton-meters. The maximum continuous rotational frequency of the electric motor of the first 9 and second 10 rotating pairs is 57 revolutions per minute, while the maximum continuous rotational frequency of the electric motor of the fourth rotating pair 12 is 245 revolutions per minute. The rotating connections of the third 11 and fifth 13 rotating pairs are made up by open ring sliding guides. The guide of the third rotating pair 11 is a body 20 in the form of a ring section with an angular length of 210 degrees, equipped with an inner annular T-shaped groove 21, open to the outside. The body 20 constitutes a section of the third segment 6. A fitting T-shaped slider 22, which is a ring section with an angular length of 200 degrees and which is a part of the second segment 5, slides rotationally in the T-shaped groove 21. The cooperating surfaces of the groove 21 and slider 22 are separated from each other by sliding linings 23 and 24 printed in the FDM technology from a material with the trade name Diran 410MF07. The sensor for the mutual position of the segments of the third rotating pair 11 is a ring section 25 made of magnetic tape, mounted coaxially to the slider 22, and a magnetic encoder 26 attached to the body 20. The sliding guide of the fifth rotating pair 13 has an analogous design. It is made up by a body 27, in the form of a ring section with angular length of 210 degrees, which is a part of the fifth segment 8, and a T-shaped slider 28, which is a ring section with angular length of 200 degrees, which is a part of the fourth segment 7. The body 27 has a T-shaped groove 29 matching the shape of the T-shaped slider 28. Sliding linings, not shown in the drawing, printed in the FDM technology from Diran 410MF07 material, are also used in this sliding guide. The sensor for the mutual position of the segments of the fifth rotating pair 13 is a ring section 30 made of magnetic tape, mounted coaxially to the slider 28, and a magnetic encoder 31 attached to the body 27. The measurement resolution of encoders 26 and 31 is one angular degree. The first segment 3 has a mechanism for adjusting its length L1, measured along the axis of rotation 32 of the first rotating pair 9, in the form of two parallel linear guides 33 equipped with a known linear position sensor 34, such as a linear potentiometer, to read the current length L1. The L1 length adjustment range is 89.2 to 163.7 mm. The third segment 6 of the exoskeleton 1 is equipped with an analogous mechanism for adjusting the length L2, that is, two parallel linear guides 35 and a potentiometric position sensor 34. The length L2 is measured along the axis of rotation 14 of the third rotating pair 11 and can be adjusted from 281.7 to 381.7 mm. Moreover, the fifth segment 8 can adjust its length L3, so that the distance of the handle 19 from the body 27 of the sliding guide of the fifth rotating pair 13 can be adjusted. This is performed by means of a guide 36 with an analogous position sensor 34, providing the adjustment of the length L3 from 229.3 to 245.3 mm. The limb 2 is attached to the exoskeleton 1 by means of sections of braided plastic tapes terminated by known snap buckles. The forearm 37 of the limb 2 is attached to the exoskeleton 1 by means of two sections 38 of such tape, attached to the body 27 of the fifth rotating pair 13 and buckles 39. The arm 40 of the same limb 2 is attached to the exoskeleton 1 by means of two sections 41 of analogous tape, attached to the body 20 of the third rotating pair 11 and buckles 42.

The so-called Denavit-Hartenberg notation is used to describe the mutual positions of multi-segment kinematic chains. For the purposes of this notation, a right-handed spatial coordinate system with *Xᵢ Yᵢ Zᵢ* axes is associated with each segment of the kinematic chain of the exoskeleton, where *i* is the number of the segment with which a given coordinate system is associated and the *Zᵢ* axis of this system coincides with the axis of rotation of segment *i+1,* forming a given rotating pair with segment *i*. These systems are shown in Fig.17. For example, the zeroth segment 3 is associated with the system *X₀ Y₀ Z₀,* with the first segment 4 rotating with respect to the zeroth segment 3 around the *Z₀* axis, i.e., around the axis 32 of the first rotating pair 9, while the second segment 5 is associated with the system *X₂ Y₂ Z₂,* with the fourth segment 6 rotating with respect to the second segment 5 around the *Z₂* axis, i.e., around the axis 14 of the third rotating pair 11. The position of each such coordinate system *X Yᵢ Zᵢ*, when segment *i* is at the zeroth position relative to the preceding segment *i-1,* is determined by two angular variables *Θᵢ* and *αᵢ,* and two linear variables *aᵢ* and *dᵢ*. The angular variable *Θ₁* determines the so-called joint angle, while the angular variable *αᵢ* determines the twist of segment *i.* The linear variable *aᵢ* determines the length of segment *i,* while the linear variable *dᵢ* determines the so-called offset of the joint.

The exoskeleton whose all segments are in the zeroth position is shown in Fig.17. For this example of the exoskeleton 1, the value of the variables *Θ₃, Θ₄, Θ₅, a₁, a₂, a₃, a₄, a₅, d₂* and *d₄* is zero. The value of the variables *Θ₁*, *Θ₂, α₂* and *α₅* for this exoskeleton is 90 degrees, the value of the variables *α₁, α₃* and *α₄* is -90 degrees, and the values of the variables *d₁, d₃* and *d₅* correspond to the lengths of the segments described above, L1, L2 and L3, respectively. The range of relative rotational motion of the segments in the first rotating pair 9 is -140 degrees to 90 degrees. The range of relative rotational motion of the segments in the second 10 and third 11 rotating pairs is -50 degrees to 130 degrees. The range of relative rotational motion of the segments in the fourth rotating pair 12 is 0 to 140 degrees, and the range of relative rotational motion of the segments in the fifth rotating pair 13 is -80 to 80 degrees.

For the purposes of rehabilitation, the exoskeleton 1 can be attached to the frame 43, which is constructed from known aluminum structural profiles, either by means of the zeroth segment 3 (Fig.16) or to the patient's body in the region of their shoulder girdle. The attachment of the exoskeleton 1 to the frame 43 is performed by means of the suitably shaped part of the zeroth segment 3 and T-shaped bolts and inserts. The attachment of the exoskeleton 1 to the patient's body is possible by means of an alternative zeroth segment 3' and straps not shown in the drawing. All the above-mentioned position sensors and electric motors are connected electronically to the control cabinet 44, and through it to an operator panel with a touch screen, not shown in the drawing.

### List of designations

- 1 -: exoskeleton
- 2 -: right upper limb
- 3 -: zeroth segment of the exoskeleton
- 3' -: alternative zeroth segment of the exoskeleton
- 4 -: first segment of the exoskeleton
- 5 -: second segment of the exoskeleton
- 6 -: third segment of the exoskeleton
- 7 -: fourth segment of the exoskeleton
- 8 -: fifth segment of the exoskeleton
- 9 -: first rotating pair
- 10 -: second pair of the exoskeleton
- 11 -: third rotating pair of the exoskeleton
- 12 -: fourth rotating pair of the exoskeleton
- 13 -: fifth rotating pair of the exoskeleton
- 14 -: axis of rotation of the third rotating pair
- 15 -: axis of rotation of the fifth rotating pair
- 16 -: straight line parallel to the transverse axis of the body of the rehabilitated person
- 17 -: shoulder of the right upper limb
- 18 -: hand of the right upper limb
- 19 -: hand grip
- 20 -: sliding guide body of the third rotating pair
- 21 -: T-shaped groove in the body
- 22 -: slider of the sliding guide of the third rotating pair
- 23 -: T-shaped groove sliding lining
- 24 -: slider sliding lining
- 25 -: magnetic tape
- 26 -: magnetic encoder
- 27 -: body of the sliding guide of the fifth rotating pair
- 28 -: slider of the sliding guide of the fifth rotating pair
- 29 -: T-shaped groove in the body
- 30 -: magnetic tape
- 31 -: magnetic encoder
- 32 -: axis of rotation of the first rotating pair
- 33 -: linear guides of the first exoskeleton segment
- 34 -: linear guide position sensor
- 35 -: linear guides of the third exoskeleton segment
- 36 -: linear guide of the fifth exoskeleton segment
- 37 -: forearm of the right upper limb
- 38 -: forearm attachment strap
- 39 -: tie-down buckle
- 40 -: arm of the right upper limb
- 41 -: arm attachment strap
- 42 -: tie-down buckle
- 43 -: frame
- 44 -: control cabinet
- L1 -: current length of the first segment of the exoskeleton
- L2 -: current length of the third segment of the exoskeleton
- L3 -: current length of the fifth segment of the exoskeleton

## Claims

1. A rehabilitation exoskeleton for a human upper limb, having a form of an open kinematic linear chain of six serially arranged rigid segments connected to each other in rotating pairs, in which three of the segments have a mechanism for adjusting their length, the kinematic chain is made up by a zeroth (3), first (4), second (5), third (6), fourth (7) and fifth (8) segments connected rotationally in sequence, forming five consecutive rotating pairs (9, 10, 11, 12, 13), of which the first rotating pair (9) is made up by the zeroth (3) and the first (4), the second rotating pair (10) is made up by the first (4) and the second (5) segments, the third rotating pair (11) is made up by the second (5) and the third (6) segments, the fourth rotating pair (12) is made up by the third (6) and the fourth (7) segments, while the fifth rotating pair (13) is made up by the fourth (7) and the fifth (8) segments, which is the last segment in this chain, each of the rotating pair has a straight line marking axis of rotation of the rotation pair, the kinematic chain is equipped with means for attaching segments of the chain to an arm and a forearm of the rehabilitated limb, the zeroth (3) segment is located adjacent to a shoulder of the rehabilitated limb, while the fifth (8) segment is located adjacent to ta hand and equipped with a hand-held grip, in each rotating pair, there is a sensor for the measuring mutual angular placement of the segments forming that rotating pair, the rotating connection of the three of the rotating pairs is made up by a separate rotating electric motor, wherein a stator of the motor is rigidly connected to one segment of a given rotating pair, a rotor of the motor is rigidly connected to second segment of that rotating pair, each of the motors has a given maximum continuous torque, has a given maximum rotational speed and includes an integrated sensor measuring angular position of the rotor position relative to the stator, **characterized in that,** a straight line marking the axis of rotation of each rotating pair is spatially perpendicular to the straight line marking the axis of rotation of a rotating pair adjacent in the chain, the axes of rotation (14 and 15) of the third (11) and the fifth (13) rotating pairs of the exoskeleton (1) are parallel to longitudinal axis of the arm and forearm respectively when they are attached to the exoskeleton (1) the rotating connection made up by the separate rotating electric motor are in the first (9), second (10) and the fourth (12) rotating pairs, the rotating connection of the third (11) and the fifth (13) rotating pairs are made in the form of a ring sliding guide (20,22 and 27,28), that surrounds the arm and the forearm respectively, each of these sliding guides comprises a body (20,27) in the form of a ring section with an inner annular groove (21,29), open to the outside and advantageously T-shaped, and a rotating slider (22,28) in the form of a ring section with a protrusion shaped to fit into the groove (21,29) of the-body (20,27), the mechanism for adjusting length is located in the first segment (4) and adjusts (33) its length (L1), measured along the axis of rotation (32) of the first rotating pair (9), in the third segment (6) and adjusts (35) its length (L2) measured along the axis of rotation (14) of the third rotating pair (11), and in the fifth segment (8) and adjusts (36) its length (L3), measured along the axis of rotation (15) of the fifth rotating pair (13), the adjustment mechanisms (33,35 and 36) of said lengths (L1, L2 and L3) of the first (4), third (6) and fifth (8) segments are equipped with a sensor (34) of the current value of said length, while the sensor for the measuring mutual angular position of the segments of the third (11) and fifth (13) rotating pairs is a ring section made of magnetic tape (25, 30), mounted coaxially to the rotating slider (22,28) of the corresponding guide, and a magnetic encoder (26,31) attached to the body (20,27) of said sliding guide.

2. The exoskeleton according to claim 1, **characterized in that** when each segment *i* (3, 4, 5, 6, 7 and 8) of the kinematic chain of the exoskeleton (1) is associated with a right-handed spatial coordinate system with *Xᵢ Yᵢ Zᵢ* axes, where *i* is the number of the segment with which a given coordinate system is associated and the *Zᵢ* axis of this system coincides with the axis of rotation of segment *i*+*1,* forming a given rotating pair with segment *i,* then according to Denavit-Hartenberg notation, the position of each coordinate system *Xᵢ Yᵢ Zᵢ*, when segment *i* is at the zeroth position relative to the preceding segment *i-1,* is determined by two angular variables *Θᵢ* and *αᵢ,* and two linear variables *aᵢ* and *dᵢ*, wherein the value of the variables *Θ₁, Θ₂, α₂* and *α₅* is 90 degrees, the value of the variables *α₁, α₃,* and *α₄* is -90 degrees, the values of the variables *d₁, d₃* and *d₅* are greater than zero, the value of the variables *Θ₃, Θ₄, Θ₅, α₁, α₂, α₃, α₄, α₅, d₂,* and *d₄* is zero, while the range of relative rotational motion of the segments (3, 4) in the first rotating pair (9) is -140 degrees to 90 degrees, the range of relative rotational motion of the segments in the second (10) and third (11) rotating pairs is -50 degrees to 130 degrees, the range of relative rotational motion of the segments in the fourth rotating pair (12) is 0 to 140 degrees, and the range of relative rotational motion of the segments in the fifth rotating pair (13) is -80 to 80 degrees.

3. The exoskeleton according to claim 2, **characterized in that** the angular length of the body (20, 27) of each ring sliding guide is in the range of 200 to 250 degrees, wherein the body (20, 27) of each guide equipped with a means for attaching the rehabilitated limb (2) therein, advantageously in the form of a flexible tape (38, 41) with a tie-down buckle (39, 42).

4. The exoskeleton according to claim 1 or 2 or 3, **characterized in that** the measurement resolution of the mutual angular position sensors of the segments in the third (11) and the fifth (13) rotating pairs is at least one degree, and the measurement resolution of the mutual angular position of the segments in the first (9), second (10) and fourth (12) rotating pairs is at least 0.1 degrees.

5. The exoskeleton according to claim 1 or 2 or 3 or 4, **characterized in that** the maximum continuous torque of the electric motor of the first (9) and the second (10) rotating pairs is in the range of 46 to 50 newton-metres, while the maximum continuous torque of the electric motor of the fourth rotating pair (12) is in the range of 8 to 10 newton-meters.

6. The exoskeleton according to claim 5, **characterized in that** the maximum continuous rotational speed of the electric motor of the first (9) and the second (10) rotating pairs is in the range of 55 to 59 revolutions per minute, while the maximum continuous rotational speed of the electric motor of the fourth (12) rotating pair is in the range of 240 to 250 revolutions per minute.

## Patentansprüche

1. Rehabilitations-Exoskelett für eine obere menschliche Extremität, in Form einer offenen kinematischen linearen Kette aus sechs seriell angeordneten starren Segmenten, die jeweils paarweise drehbar miteinander verbunden sind, wobei die kinematische Kette aus einem nullten (3), ersten (4), zweiten (5), dritten (6), vierten (7) und fünften (8) Segment besteht, die nacheinander drehbar miteinander verbunden sind und fünf aufeinanderfolgende Drehgelenkpaare (9, 10, 11, 12, 13) bilden, wobei das erste Drehgelenkpaar (9) aus dem nullten (3) und dem ersten (4) Segment besteht, das zweite Drehgelenkpaar (10) aus dem ersten (4) und dem zweiten (5) Segment besteht, das dritte Drehgelenkpaar (11) aus dem zweiten (5) und dem dritten (6) Segment besteht, das vierte Drehgelenkpaar (12) aus dem dritten (6) und dem vierten (7) Segment besteht, während das fünfte Drehgelenkpaar (13) aus dem vierten (7) und dem fünften (8) Segment besteht, welches das letzte Segment dieser Kette ist, wobei jedes Drehgelenkpaar eine gerade Linie aufweist, die die Drehachse des jeweiligen Drehgelenkpaares kennzeichnet, wobei die kinematische Kette mit Mitteln zum Befestigen der Segmente der Kette an einem Arm und einem Unterarm der rehabilitierten Extremität versehen ist, wobei das nullte (3) Segment angrenzend an eine Schulter der rehabilitierten Extremität angeordnet ist, während das fünfte (8) Segment angrenzend an die Hand angeordnet und mit einem Handgriff versehen ist, wobei in jedem Drehgelenkpaar ein Sensor zur Messung der gegenseitigen Winkelstellung der die jeweilige Drehverbindung bildenden Segmente angeordnet ist, wobei die Drehverbindung von drei der Drehgelenkpaare jeweils durch einen separaten rotierenden Elektromotor gebildet ist, wobei ein Stator des Motors starr mit einem Segment des jeweiligen Drehgelenkpaares verbunden ist und ein Rotor des Motors starr mit dem zweiten Segment dieses Drehgelenkpaares verbunden ist, wobei jeder der Motoren ein bestimmtes maximales Dauerdrehmoment sowie eine bestimmte maximale Drehzahl aufweist und einen integrierten Sensor zur Messung der Winkelstellung des Rotors relativ zum Stator umfasst, **dadurch gekennzeichnet, dass** eine gerade Linie, die die Drehachse jedes Drehgelenkpaares kennzeichnet, räumlich senkrecht zu der geraden Linie verläuft, die die Drehachse eines benachbarten Drehgelenkpaares in der Kette kennzeichnet, dass die Drehachsen (14 und 15) des dritten (11) und des fünften (13) Drehgelenkpaares des Exoskeletts (1) parallel zur Längsachse des Arms bzw. des Unterarms verlaufen, wenn diese am Exoskelett (1) befestigt sind, dass die durch separate rotierende Elektromotoren gebildeten Drehverbindungen im ersten (9), zweiten (10) und vierten (12) Drehgelenkpaar angeordnet sind, dass die Drehverbindungen des dritten (11) und des fünften (13) Drehgelenkpaars in Form einer ringförmigen Gleitführung (20, 22 bzw. 27, 28) ausgebildet sind, die den Arm bzw. den Unterarm umgibt, wobei jede dieser Gleitführungen einen Körper (20, 27) in Form eines Ringsegments mit einer inneren umlaufenden Nut (21, 29), die nach außen offen und vorzugsweise T-förmig ist, sowie einen drehbaren Schieber (22, 28) in Form eines Ringsegments mit einem Vorsprung umfasst, der in die Nut (21, 29) des Körpers (20, 27) eingreift, dass ein Längenverstellmechanismus im ersten Segment (4) angeordnet ist und dessen Länge (L1), gemessen entlang der Drehachse (32) des ersten Drehgelenkpaares (9), verstellt (33), im dritten Segment (6) angeordnet ist und dessen Länge (L2), gemessen entlang der Drehachse (14) des dritten Drehgelenkpaares (11), verstellt (35), sowie im fünften Segment (8) angeordnet ist und dessen Länge (L3), gemessen entlang der Drehachse (15) des fünften Drehgelenkpaares (13), verstellt (36), wobei die Verstellmechanismen (33, 35 und 36) dieser Längen (L1, L2 und L3) der Segmente (4), (6) und (8) jeweils mit einem Sensor (34) zur Erfassung des aktuellen Wertes dieser Länge ausgestattet sind, während der Sensor zur Messung der gegenseitigen Winkelstellung der Segmente des dritten (11) und des fünften (13) Drehgelenkpaares ein Ringsegment aus Magnetband (25, 30) ist, das koaxial zum drehbaren Schieber (22, 28) der jeweiligen Führung angeordnet ist, sowie ein am Körper (20, 27) dieser Gleitführung befestigter Magnetencoder (26, 31).

2. Exoskelett nach Anspruch 1, **dadurch gekennzeichnet, dass** jedem Segment *i* (3, 4, 5, 6, 7 und 8) der kinematischen Kette des Exoskeletts (1) ein rechtshändiges räumliches Koordinatensystem mit den Achsen *Xᵢ, Yᵢ, Zᵢ* zugeordnet ist, wobei *i* die Nummer des Segments ist, dem das jeweilige Koordinatensystem zugeordnet ist, und die *Zᵢ*-Achse dieses Systems mit der Drehachse des Segments *i+1* zusammenfällt, welches mit dem Segment *i* ein Drehgelenkpaar bildet, wobei gemäß der Denavit-Hartenberg-Notation die Lage jedes Koordinatensystems *Xᵢ Yᵢ Zᵢ,* wenn sich das Segment *i* in der Nullstellung relativ zum vorhergehenden Segment *i-1* befindet, durch zwei Winkelvariablen *Θᵢ* und *aᵢ* sowie zwei lineare Variablen *aᵢ* und *dᵢ* bestimmt ist, wobei der Wert der Variablen *Θ₁, Θ₂, α₂* und *α₅* 90 Grad beträgt, der Wert der Variablen *α₁, α₃* und *α₄* -90 Grad beträgt, die Werte der Variablen *d₁, d₃* und *d₅* größer als null sind, der Wert der Variablen *Θ*₃, *Θ₄, Θ₅, Θ₁, a₂, a₃, a₄, a₅, d₂* und *d₄* null ist, während der Bereich der relativen Drehbewegung der Segmente (3, 4) im ersten Drehgelenkpaar (9) von -140 Grad bis 90 Grad reicht, der Bereich der relativen Drehbewegung der Segmente im zweiten (10) und dritten (11) Drehgelenkpaar von -50 Grad bis 130 Grad reicht, der Bereich der relativen Drehbewegung der Segmente im vierten Drehgelenkpaar (12) von 0 bis 140 Grad reicht und der Bereich der relativen Drehbewegung der Segmente im fünften Drehgelenkpaar (13) von -80 bis 80 Grad reicht.

3. Exoskelett nach Anspruch 2, **dadurch gekennzeichnet, dass** die Winkelspannweite des Körpers (20, 27) jeder ringförmigen Gleitführung im Bereich von 200 bis 250 Grad liegt, wobei der Körper (20, 27) jeder Führung mit Mitteln zum Befestigen der rehabilitierten Extremität (2) darin versehen ist, vorzugsweise in Form eines flexiblen Bandes (38, 41) mit einer Spann- bzw. Klemmschnalle (39, 42).

4. Exoskelett nach Anspruch 1 oder 2 oder 3, **dadurch gekennzeichnet, dass** die Messauflösung der Sensoren für die gegenseitige Winkelstellung der Segmente im dritten (11) und fünften (13) Drehgelenkpaar mindestens 1 Grad beträgt und die Messauflösung der gegenseitigen Winkelstellung der Segmente im ersten (9), zweiten (10) und vierten (12) Drehgelenkpaar mindestens 0,1 Grad beträgt.

5. Exoskelett nach Anspruch 1 oder 2 oder 3 oder 4, **dadurch gekennzeichnet, dass** das maximale Dauerdrehmoment des Elektromotors des ersten (9) und des zweiten (10) Drehgelenkpaars im Bereich von 46 bis 50 Newtonmetern liegt, während das maximale Dauerdrehmoment des Elektromotors des vierten Drehgelenkpaars (12) im Bereich von 8 bis 10 Newtonmetern liegt.

6. Exoskelett nach Anspruch 5, **dadurch gekennzeichnet, dass** die maximale Dauerdrehzahl des Elektromotors des ersten (9) und des zweiten (10) Drehgelenkpaars im Bereich von 55 bis 59 Umdrehungen pro Minute liegt, während die maximale Dauerdrehzahl des Elektromotors des vierten (12) Drehgelenkpaars im Bereich von 240 bis 250 Umdrehungen pro Minute liegt.

## Revendications

1. Un exosquelette de rééducation pour un membre supérieur humain, ayant la forme d'une chaîne cinématique linéaire ouverte composée de six segments rigides disposés en série et reliés entre eux par des liaisons pivotantes, la chaîne cinématique étant constituée d'un segment zéro (3), d'un premier (4), d'un deuxième (5), d'un troisième (6), d'un quatrième (7) et d'un cinquième (8) segment, reliés successivement en formant cinq paires de rotation consécutives (9, 10, 11, 12, 13), dont la première paire de rotation (9) est constituée des segments zéro (3) et premier (4), la deuxième paire de rotation (10) des segments premier (4) et deuxième (5), la troisième paire de rotation (11) des segments deuxième (5) et troisième (6), la quatrième paire de rotation (12) des segments troisième (6) et quatrième (7), tandis que la cinquième paire de rotation (13) est constituée des segments quatrième (7) et cinquième (8), qui est le dernier segment de cette chaîne, chaque paire de rotation possédant un axe de rotation rectiligne, la chaîne cinématique étant équipée de moyens de fixation des segments au bras et à l'avant-bras du membre en rééducation, le segment zéro (3) étant situé à proximité de l'épaule, tandis que le segment cinquième (8) est situé à proximité de la main et équipé d'une poignée, dans chaque paire de rotation étant disposé un capteur de mesure de la position angulaire relative des segments formant cette paire, la liaison pivotante de trois des paires de rotation étant réalisée par un moteur électrique rotatif séparé, dont le stator est fixé rigidement à un segment et le rotor à l'autre segment, chaque moteur ayant un couple maximal continu et une vitesse de rotation maximale, et comprenant un capteur intégré de position angulaire du rotor par rapport au stator, **caractérisé en ce que** les axes de rotation de chaque paire sont perpendiculaires dans l'espace à ceux des paires adjacentes, que les axes (14,15) des troisième (11) et cinquième (13) paires sont parallèles à l'axe longitudinal du bras et de l'avant-bras respectivement lorsqu'ils sont fixés à l'exosquelette (1), les liaisons pivotantes réalisées par des moteurs électriques distincts sont situées dans les première (9), deuxième (10) et quatrième (12) paires de rotation, les liaisons pivotantes des troisième (11) et cinquième (13) paires de rotation sont réalisées sous la forme d'un guide annulaire coulissant (20, 22 et 27, 28) entourant respectivement le bras et l'avant-bras, chacun de ces guides coulissants comprend un corps (20, 27) sous forme de section annulaire avec une rainure annulaire interne (21, 29), ouverte vers l'extérieur et avantageusement en forme de T, et un coulisseau rotatif (22, 28) sous forme de section annulaire comportant une saillie adaptée pour s'insérer dans la rainure (21, 29) du corps (20, 27), un mécanisme de réglage de longueur est situé dans le premier segment (4) et ajuste (33) sa longueur (L1), mesurée le long de l'axe de rotation (32) de la première paire de rotation (9), dans le troisième segment (6) et ajuste (35) sa longueur (L2), mesurée le long de l'axe de rotation (14) de la troisième paire de rotation (11), et dans le cinquième segment (8) et ajuste (36) sa longueur (L3), mesurée le long de l'axe de rotation (15) de la cinquième paire de rotation (13), les mécanismes de réglage (33, 35 et 36) desdites longueurs (L1, L2 et L3) des premier (4), troisième (6) et cinquième (8) segments sont équipés d'un capteur (34) de la valeur actuelle de ladite longueur, tandis que le capteur de mesure de la position angulaire relative des segments des troisième (11) et cinquième (13) paires de rotation est une section annulaire constituée d'une bande magnétique (25, 30), montée coaxialement au coulisseau rotatif (22, 28) du guide correspondant, et un codeur magnétique (26, 31) fixé au corps (20, 27) dudit guide coulissant.

2. L'exosquelette selon la revendication 1, **caractérisé en ce que** lorsque chaque segment *i* (3, 4, 5, 6, 7 et 8) de la chaîne cinématique de l'exosquelette (1) est associé à un système de coordonnées spatiales direct *Xᵢ Yᵢ Zᵢ,* où *i* est le numéro du segment auquel le système est associé et l'axe *Zᵢ* coïncide avec l'axe de rotation du segment *i+1* formant une paire de rotation avec le segment *i,* alors selon la notation de Denavit-Hartenberg, la position de chaque système de coordonnées *Xᵢ Yᵢ Zᵢ,* lorsque le segment *i* est en position zéro par rapport au segment précédent *i-1,* est déterminée par deux variables angulaires *Θᵢ* et *αᵢ,* et deux variables linéaires *aᵢ* et *dᵢ,* dans laquelle la valeur des variables *Θ₁*, *Θ₂, α₂* et *α₅* est de 90 degrés, la valeur des variables *α₁*, *α₃* et *α₄* est de -90 degrés, les valeurs des variables *d₁, d₃* et *d₅* sont supérieures à zéro, la valeur des variables *Θ₃, Θ₄, Θ₅, a₁, a₂, a₃, a₄, a₅, d₂* et *d₄* est nulle, tandis que l'amplitude du mouvement de rotation relatif des segments (3, 4) dans la première paire de rotation (9) est de -140 degrés à 90 degrés, celle des segments dans les deuxième (10) et troisième (11) paires de rotation est de -50 degrés à 130 degrés, celle des segments dans la quatrième paire de rotation (12) est de 0 à 140 degrés, et celle des segments dans la cinquième paire de rotation (13) est de -80 à 80 degrés.

3. L'exosquelette selon la revendication 2, **caractérisé en ce que** la longueur angulaire du corps (20, 27) de chaque guide annulaire coulissant est comprise dans la plage de 200 à 250 degrés, ledit corps (20, 27) de chaque guide étant équipé de moyens pour fixer le membre en rééducation (2), avantageusement sous la forme d'une bande flexible (38, 41) avec une boucle de serrage (39, 42).

4. L'exosquelette selon l'une quelconque des revendications 1 ou 2 ou 3, **caractérisé en ce que** la résolution de mesure des capteurs de position angulaire relative des segments dans les troisième (11) et cinquième (13) paires de rotation est d'au moins un degré, et la résolution de mesure de la position angulaire relative des segments dans les première (9), deuxième (10) et quatrième (12) paires de rotation est d'au moins 0,1 degré.

5. L'exosquelette selon l'une quelconque des revendications 1 ou 2 ou 3 ou 4, **caractérisé en ce que** le couple continu maximal du moteur électrique de la première (9) et de la deuxième (10) liaisons rotatives est compris dans une plage de 46 à 50 newton-mètres, tandis que le couple continu maximal du moteur électrique de la quatrième liaison rotative (12) est compris dans une plage de 8 à 10 newton-mètres.

6. L'exosquelette selon la revendication 5, **caractérisé en ce que** la vitesse de rotation maximale continue du moteur électrique des première (9) et deuxième (10) paires de rotation est comprise dans la plage de 55 à 59 tours par minute, tandis que la vitesse de rotation maximale continue du moteur électrique de la quatrième paire de rotation (12) est comprise dans la plage de 240 à 250 tours par minute.
